Europäisches Patentamt

European Patent Office

Office européen des brevets

(19)

(11) **EP 1 006 503 B1**

(12) **EUROPÄISCHE PATENTSCHRIFT**

(45) Veröffentlichungstag und Bekanntmachung des Hinweises auf die Patenterteilung:
**02.01.2004   Patentblatt 2004/01**

(51) Int Cl.7: **G08G 1/14**

(21) Anmeldenummer: **99250407.6**

(22) Anmeldetag: **18.11.1999**

(54) **Parkraumerfassung**

Parking area acquisition

Acquisition de places de parking

(84) Benannte Vertragsstaaten:
**AT BE CH CY DE DK ES FI FR GB GR IE IT LI LU MC NL PT SE**

(30) Priorität: **02.12.1998   DE 19856478**

(43) Veröffentlichungstag der Anmeldung:
**07.06.2000   Patentblatt 2000/23**

(73) Patentinhaber: **DDG Gesellschaft für Verkehrsdaten mbH**
**40547 Düsseldorf (DE)**

(72) Erfinder: **Fastenrath, Ulrich Dr.**
**41462 Neuss (DE)**

(74) Vertreter: **Meissner, Peter E., Dipl.-Ing. et al**
**Meissner & Meissner,**
**Patentanwaltsbüro,**
**Hohenzollerndamm 89**
**14199 Berlin (DE)**

(56) Entgegenhaltungen:
**WO-A-97/19568          DE-A- 19 737 440**
**DE-C- 4 433 982**

**Beschreibung**

Die Erfindung betrifft ein Verfahren zur automatischen Erfassung von Informationen betreffend freien Parkraum in einem Verkehrsnetz, insbesondere in Städten, sowie eine Vorrichtung zur Durchführung des Verfahrens.

Hinsichtlich der Erfassung freien Parkraums ist es bekannt, für große Parkhäuser und deren Parkleitsysteme in großen Städten die Anzahl noch freier Plätze in Parkhäusem mit Sensoren am Eingang und Ausgang des Parkhauses zu erfassen und über Displays an Hauptverkehrsstraßen anzuzeigen.

Die US 5,751,973 offenbart ein Parkhausmanagementsystem mit eingangsseitigen und ausgangsseitigen Erfassungssystemen zum Erfassen einfahrender und ausfahrender Fahrzeuge und einer diese Daten erfassenden und weiterverarbeitenden Zentrale.

Die EP 0 791 906 A1 offenbart ein Verfahren zur Steuerung des Fahrzeugverkehrs in einem definierten Straßenverkehrsbereich, wobei die Parkkapazität von öffentlichen Parkmöglichkeiten mittels eines Zufahrtberechtigungssystems überwacht und angezeigt wird, wobei Parkplatzreservierungen und Sonderberechtigungsprüfungen möglich sind.

Die DE 43 33 963 offenbart ein Verfahren zur verbindlichen Reservierung eines Parkplatzes vor Fahrtantritt durch einen Parkplatzbenutzer unter Angabe eines Zielortes und der Zulassungsnummer des Fahrzeuges, wobei eine Benutzungsgebühr dem Parkplatzbenutzer bei der Buchung abgebucht wird.

Aufgabe der vorliegenden Erfindung ist eine möglichst einfache, kostengünstige und effizient optimierte Erfassung von freiem Parkraum in einem Verkehrsnetz, insbesondere in einer Stadt. Die Aufgabe wird durch die unabhängigen Ansprüche gelöst.

Das erfindungsgemäße Verfahren ermöglicht ohne den Einbau von Schleifendetektoren in jeder Parkbucht eines Verkehrsnetz einer Stadt eine sehr gute Überwachung des Parkraumes hinsichtlich der Belegungsquote und eine Differenzierung bei der Ausgabe der Belegungsquote hinsichtlich verschiedener Zonen einer Stadt. Zur Erfassung werden dabei fahrzeugseitige Endgeräte verwendet, welche künftig in Fahrzeugen auch zur Navigation und zur Verkehrsdatenerfassung durch im Verkehr mitschwimmende Fahrzeuge (FCD) verwendet werden, so daß ohne aufwendige Modifikationen der Parkraum erfasst werden kann.

Im Prinzip wird ein Fahrzeug als parkend angesehen, wenn es steht und vorgegebene Bedingungen erfüllt. Die stehenden Fahrzeuge in einer Stadt oder einem Teile einer Stadt können Zonen-weise mit bekannten Daten (beispielsweise aus einer historischen Datenbank von erfindungsgemäß erfassten Informationen von Fahrzeugen) verglichen werden, so daß festgestellt werden kann, zu welchem Anteil Parkraum belegt ist. Insbesondere wenn die Position eines Fahrzeuges sehr genau bestimmt werden kann und auch die Positionen von Parkmöglichkeiten sehr genau bekannt sind, können auch Hinweise auf einzelne Parkmöglichkeiten an hiernach anfragende Fahrzeuge ausgegeben werden.

Mit den erfassten Informationen über freien Parkraum können unterschiedliche Informationen generiert und an Fahrzeuge ausgegeben werden. Insbesondere ist es möglich, (beispielsweise auch nach Zonen differenziert) anteilsmäßig wie auf den Gesamtparkraum bezogen eine Quote freien Parkraums (anteilig vom gesamten Parkraum) anzugeben. Ferner ist es auch möglich, Zonen von freiem (oder mit einer hinreichend hohen Quote von freiem) Parkraum in einer Stadt an Endgeräte auszugeben. Auch ist es möglich, an Endgeräte detaillierte Positionsangaben hinsichtlich einzelner freier Parkplätze auszugeben, wenn diese hinreichend genau bekannt sind, so daß vom Fahrzeugendgerät Navigationshinweise (die im Endgerät oder einer Zentrale generiert wurden) zu einem bestimmten Parkplatz ausgegeben werden können.

Hinsichtlich einer Vorrichtung zur Durchführung des Verfahrens ist in einer Zentrale unter anderem eine Parkraumdatenbearbeitungseinrichtung zum Erzeugen von an Endgeräte auszugebenden Informationen vorgesehen, welche aus Informationen zu vorhandenen Parkraum und gespeicherten Informationen zu von Fahrzeugen gemeldetem nicht mehr freiem Parkraum generierbar sind. Zum Empfangen von Anfragen von Endgeräten hinsichtlich freiem Parkraum sowie zum Senden von Antworten an Endgeräte hinsichtlich freiem Parkraum wird zweckmäßig eine Kurznachrichten- Sende und Empfangseinrichtung für Mobilfunk-Point-to-Point Nachrichten verwendet.

Weitere Merkmale und Vorteile der Erfindung ergeben sich aus den Unteransprüchen und der nachfolgenden Beschreibung eines Ausführungsbeispiels anhand der Zeichnung.

Dabei zeigt

Fig. 1    einen Ausschnitt eines Verkehrsnetzes mit belegtem und freiem Parkraum sowie eine den belegten Parkraum erfassende Zentrale und

Fig. 2    als Blockschaltbild einige Komponenten einer Parkraumerfassungszentrale sowie eines fahrzeugseitigen Parkraumerfassungsendgerätes.

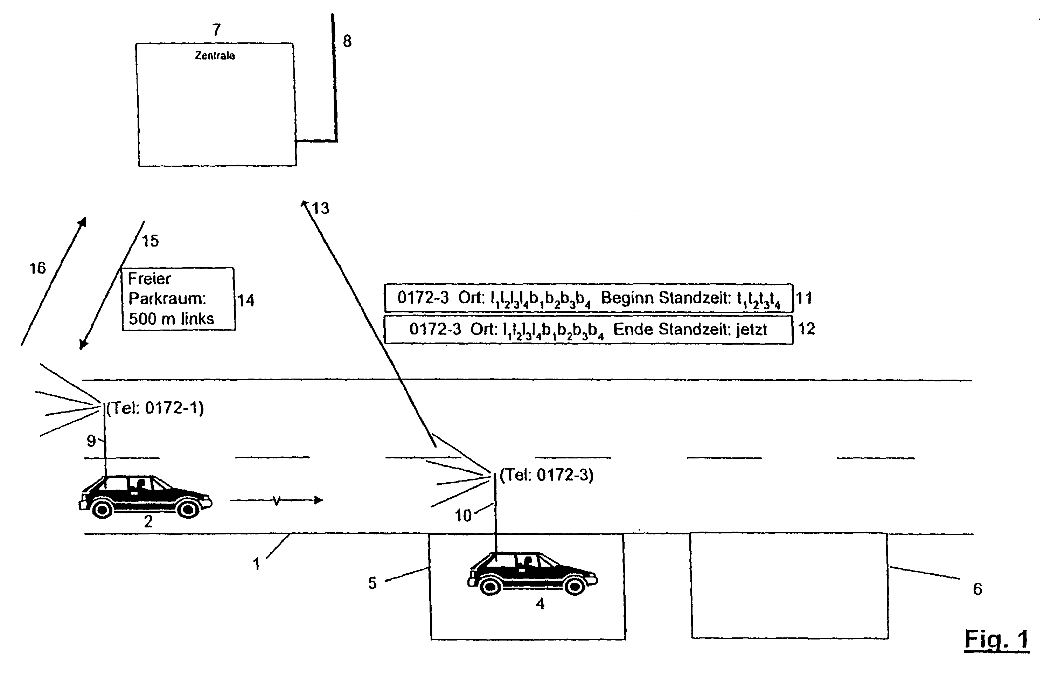

Fig. 1 zeigt eine Straße 1 eines Verkehrsnetzes (beispielsweise in einer Innenstadt), ein auf der Straße 1 fahrendes Fahrzeug 2, von einem weiteren Fahrzeug 4 belegten Parkraum 5, freien Parkraum 6 (in Form einer Parkbucht), eine Parkraumerfassungszentrale 7 mit einer Sende- und Empfangseinrichtung 8, über welche die Parkraumerfassungszentrale 7 von Sende und Empfangseinrichtungen 9, 10 der Fahrzeuge 2, 4 Informationen 11, 12 über belegten Parkraum als Mobilfunkkurznachricht 13 (SMS-MO) erhält, während die Zentrale 7 selbst an die Fahrzeuge 2, 4 Informationen 14 über freien Parkraum als Mobilfunkkurznachricht 15 (SMS-MT) aussendet.

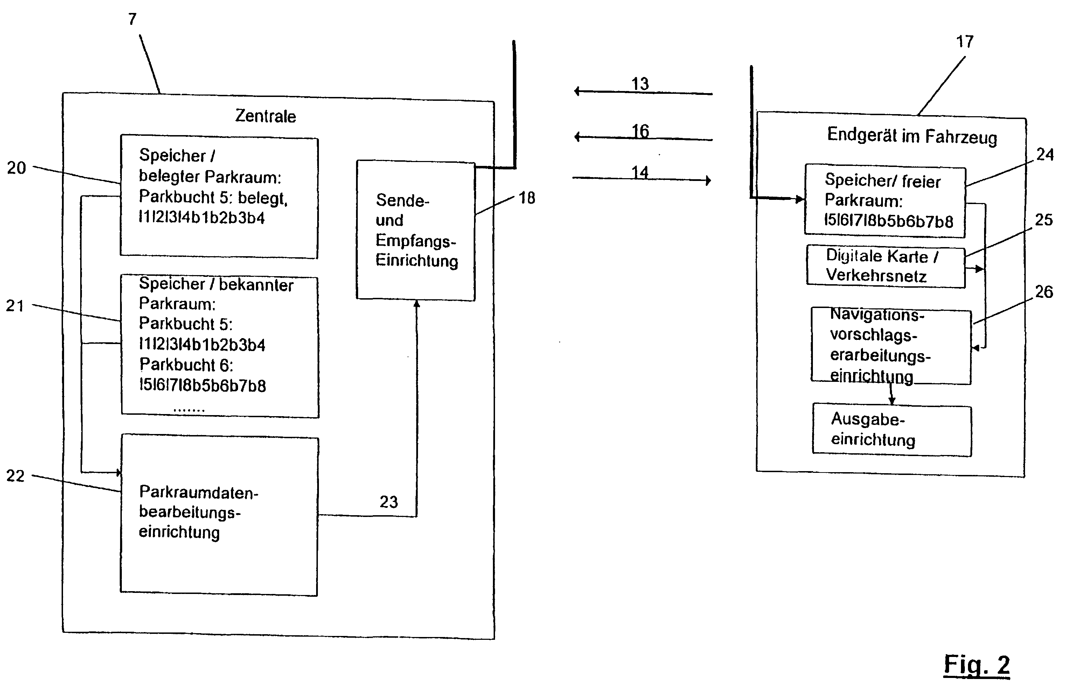

In den Fahrzeugen 2, 4 befindet sich Navigationssysteme (Nr. 17 in Fig. 2), welche auch mit Einrichtungen versehen sind, die automatisch FCD-Daten erzeugen können, also Daten, welche die Positionen von Fahrzeugen im Verkehr angeben und zur Verkehrsinformation verwendbar sind. Diese Navigations- Endgeräte in den Fahrzeugen werden nun dazu verwendet auch freien Parkraum zu erfassen. Bei einer niedrigen Quote von Fahrzeugen mit derartigen Endgeräten kann zumindest quotenmäßig (=prozentuell anteilsmäßig) hinsichtlich Zonen einer Stadt erfasst werden, wie groß die dortige Belegungsquote des Parkraums ist, in dem näherungsweise die Quote an parkenden Fahrzeugen mit derartigen Endgeräten als Quote aller parkenden Fahrzeuge angenommen wird.

Ein Fahrzeuge sendet wenn es steht zumindest unter vorgebbaren Bedingungen eine Nachrichten 11 an eine Parkraumerfassungszentrale 7. Insbesondere kann ein Fahrzeug dann, wenn es ein Automatikgetriebe aufweist, dessen Schalter in die Parkschaltung geschaltet wird oder z. B. wenn das Fahrzeug länger als vorgegebene Zeit steht, eine derartige Nachricht an die Zentrale 7 senden. Auch ist es möglich, daß ein Fahrzeug in zyklischen Abständen wenn es steht Nachrichten 13 an die Zentrale 7 sendet; in diesem Falle wird in der Zentrale 7 das Vorliegen von Bedingungen überprüft, unter welchen Bedingungen das Fahrzeug als parkend (also nicht vor einer Ampel stehend etc.), definiert wird.

Insbesondere kann ein Fahrzeug am Anfang einer stehenden Phase, also wenn es abgestellt wird (und eventuell weitere Bedingungen erfüllt sind) eine Nachricht 11 an die Zentrale 7 senden. Ferner ist es zweckmäßig, wenn das Fahrzeug am Ende einer stehenden Phase ebenfalls eine Nachricht 12 an eine Zentrale 7 sendet. Die Nachricht über den Beginn oder das Weiterbestehen einer bestehenden Phase eines Fahrzeuges (Nachricht 11) kann insbesondere den Ort des Fahrzeuges erfassen; damit würde ermöglicht, daß in der Zentrale 7 hinsichtlich einer bestimmten Parkbucht (5) weiter überprüft wird, ob diese belegt ist; femer ist es so möglich in der Zentrale 7 mehrere zu einer bestimmten Position (5) vorliegende Nachrichten 11 zu vergleichen und damit mit höherer Wahrscheinlichkeit das Vorliegen von Park-Situationen gegenüber anderen stehenden Phasen wie vor Ampeln abzugrenzen. Ferner ist es zweckmäßig, mit einer Nachricht 11, 12 betreffend stehende Phasen eines Fahrzeuges eine Identität des Fahrzeuges mit zu übermitteln, um in der Zentrale 7 bezogen auf ein bestimmtes Fahrzeug 4 überprüfen zu können, ob genau dieses Fahrzeug über eine vorgegebene Zeit steht und damit wahrscheinlich parkt. Eine Identität kann beispielsweise in einer mit einer Kurznachricht 13 übermittelten Telefonnummer (0172-3) des Endgerätes im Fahrzeug 4 bestehen. Die Identität wird zweckmäßig anonymisiert weiterverarbeitet.

In der Zentrale 7 wird aus den vorliegenden Daten zu belegtem Parkraum freier Parkraum bestimmt.

Von der Zentrale 7 können Nachrichten 14 betreffend freien Parkraum an Fahrzeuge 2 übermittelt werden. Dies kann als Cellbroadcast-Nachricht 15 an alle Fahrzeuge in einem bestimmten Bereich (= in bestimmten Funkzellen oder Funkzellengruppen) erfolgen. Ferner ist es möglich, Informationen 14 über freien Parkraum als Point to Point- Kurznachricht an bestimmte Fahrzeuge zu übertragen, was eine Abrechnung dieser Dienstleistung ermöglicht. Jedoch wird eine Abrechnung auch ermöglicht, wenn eine Cellbroadcastübertragung erfolgt und nur in bestimmten Endgeräten von Fahrzeugen 2 Schlüssel zur Entschlüsselung derartige Informationen vorliegen.

Die Übermittlung 15 von Informationen 14 betreffend freien Parkraum können-zum Beispiel zyklisch erfolgen. Sie können auch auf eine Anfrage eines Endgerätes eines Fahrzeuges 2 bei einer Zentrale 7 (beispielsweise mit einer Point-to Point-Kurznachricht 16 vom Fahrzeug 2 an die Zentrale 7) ausgegeben werden.

Der Belegungsgrad einer Zone mit parkenden Fahrzeugen (also der Anteile belegter Parkplätze an allen Parkplätzen) kann folgendermaßen näherungsweise berechnet werden:

| | |
|---|---|
| $\alpha$ | FCD Ausstattungsgrad |
| N | Anzahl Parkplätze in einem Quartier |
| $I = [t_0, t_1]$ | Beobachtungsintervall |
| $T = t_1 - t_0$ | Beobachtungszeit |
| n(t) | Anzahl Parkvorgänge im Quartier, die vor der Zeit t beginnen |
| $p_0^i, p_1^i$ | Beginn und Ende des i-ten Parkvorganges im Quartier |
| $d_i = p_1^i - p_0^i$ | Dauer des i-ten Parkvorganges |
| $d_1^I$ | Anteil der Dauer des i-ten Parkvorganges innerhalb des Beobachtungsintervalls |
| $d_I(t) = \langle d_i^I \rangle$ | Mittelwert über alle Parkvorgänge im Quartier, welche vor der Zeit t beginnen |
| B(t) | Belegungsgrad zur Zeit t |

Es gilt offenbar $d_i^I = \max(0, \min(t_1, p_1') - \max(t_0, p_0'))$ und eine Approximation des Belegungsgrades ergibt sich als

$$B(\tfrac{1}{2}(t_0 + t_1)) \approx \frac{1}{\alpha} \frac{n(t_1) d_I(t_1)}{N \cdot T}$$

Zweckmäßig ist es insbesondere, wenn zusätzlich historische Informationen in einer Datenbank in der Zentrale 7 oder Daten aus dem Verkehrsumfeld (wie Großveranstaltungen, Wetter, Wochentag) für eine Prognose des freien Parkraums zu einem künftigen Zeitpunkt verwendet werden.

Die Bestimmung von freiem Parkraum für einen zu prognostizierenden künftigen Zeitpunkt ist insbesondere vorteilhaft für Fahrzeuge, welche sich noch in einer Anfahrtsphase zu einer Zone mit zum künftigen Ankunftzeitpunkt unbekannter Belegungsquote des Parkraums befinden.

Neben Informationen über Orte mit zugehörigen Quoten von Parkraum-Belegungen sind weitere Informationen von einer Zentrale 7 an Endgeräte in einem Fahrzeug 2 übermittelbar. Insbesondere ist eine Führung in Gebiete mit einer hohen Quote mit nicht belegtem (= freiem) Parkraum möglich. Die Navigationsanweisungen können in der Zentrale 7 erzeugt und mit einer Nachricht 14 an ein Endgerät (im Fahrzeug 2) zur dortigen Ausgabe übermittelt werden oder bei Übermittlung nur der Position freien Parkraums in einer Nachricht 14 mit einem Navigationssystem im Fahrzeug 2 vor Ort erstellt und ausgegeben werden.

Im Falle längerer Anfahrten eines Fahrzeugs 2 zu freiem Parkraum 6 können wiederholt Aktualisierungen hinsichtlich Informationen zur freiem Parkraum von einer Zentrale 7 an das Endgerät des Fahrzeuges 2 gesendet werden.

Ferner ist es möglich, Preise von freiem Parkraum mit einer Nachricht 14 zu übertragen. Auch ist es einem Fahrer möglich bereits vor Antritt einer Fahrt (beispielsweise in eine Innenstadt am Samstag vormittag) bei einer Zentrale 7 hinsichtlich freiem Parkraum zum prognostizierten Ankunftszeitpunkt in der Innenstadt etc. anzufragen und von der Zentrale 7 Informationen 14 hinsichtlich erwartetem freiem Parkraum an das Fahrzeug 2 zurückzuübermitteln. Ferner ist gegebenenfalls eine Platzreservierung insbesondere für abgesperrte Parkplätze möglich.

Auch ist es möglich, daß ein Benutzer eines Endgerätes in einem Fahrzeug 2 mit einer Anfrage 16 Präferenzen hinsichtlich bevorzugter Gebiete und/oder Preise etc. von freiem Parkraum angibt.

Fig. 2 zeigt einige Komponenten einer Zentrale 7 und eines Endgerätes 17 (für ein Fahrzeug 2, 4) und zwischen diesen übermittelte Nachrichten.

In der Zentrale 7 ist eine Sende- und Empfangseinrichtung 18 zum Senden und Empfangen von Informationen, insbesondere Kurznachrichten (SMS-MO und SMS-MT) mit einer angedeuteten Sende- und Empfangsantenne 19 dargestellt. In der Zentrale 7 werden in die Sende-/Empfangseinrichtung 18 eingehende Informationen 13 betreffend belegten Parkraum in einem Speicher 20 für Informationen über belegten Parkraum abgespeichert. Femer sind in der Zentrale 7 hier in einem Speicher 21 Daten zu bekanntem Parkraum gespeichert, insbesondere mit zugeordneten Positionen. In einer Parkraumdatenbearbeitungseinrichtung 22 werden die im Speicher 20 gespeicherten Daten betreffend belegten Parkraum sowie die im Speicher 21 gespeicherten Daten betreffend bekannten Parkraum verglichen und es werden Informationen 14 betreffend freien Parkraum erstellt und (23) an die Sende-Empfangseinrichtung 18 zur Aussendung (15) an ein Endgerät 17 übergeben.

Im Endgerät 17 werden dort (aus der Zentrale 7) eingehende Nachrichten 14 betreffend freien Parkraum in einem Speicher 24 gespeichert, zweckmäßig mit ihrer Position (mit ihrer geographischen Länge $l_5$, $l_6$, $l_7$, $l_8$ und Breite $b_5$, $b_6$, $b_7$, $b_8$, hier mit je 4 Bytes) und/oder Navigationshinweisen. Im vorliegenden Fall ist im Endgerät 17 ferner eine digitale Karte 25 eines Verkehrsnetzes vorgesehen. Eine Navigationseinheit 26 bestimmt aus der digitalen Karte 25 des Verkehrsnetzes und übermittelten Informationen im Speicher 24 betreffend freien Parkraum Navigationsvorschläge zum freien Parkraum (zur Parkbucht 6 in Fig. 1 ) für das anfragende Fahrzeug (Fahrzeug 2 in Fig. 1) und gibt diese optisch und/oder akustisch aus. Die Ausgabe kann beispielsweise immer für die nächste Straßenkreuzung oder Abbiegung vorab erfolgen mit Angabe der einzuschlagenden Abbiegerichtung.

**Patentansprüche**

1. Verfahren zur automatischen Erfassung von Informationen (11, 12) betreffend belegten Parkraum (5) in einem Verkehrsnetz,

   - wobei von einem fahrzeugseitigen (2) Endgerät an eine Zentrale (7) Parkrauminformationen (11) repräsentierend eine stehende Phase des Fahrzeuges und den Fahrzeugort ($l_1$ bis $l_4$, $b_1$ bis $b_4$) übertragen werden
   - wobei von der Zentrale (7) Informationen (14) betreffend freien Parkraum generiert werden,
   - wobei von der Zentrale (7) an das fahrzeugseitiges Endgerät (2) Informationen (14) betreffend freien Parkraum übertragen werden.

2. Verfahren nach Anspruch 1,
   **dadurch gekennzeichnet,**
   **daß** zu Beginn und/oder am Ende einer stehenden Phase eines Fahrzeuges Parkrauminformationen an die Zentrale (7) übertragen werden (12).

3. Verfahren nach einem der vorhergehenden Ansprüche,
   **dadurch gekennzeichnet,**
   **daß** zu Beginn und am Ende einer stehenden Phase der Ort des Fahrzeuges übertragen wird (12).

4. Verfahren nach einem der vorhergehenden Ansprüche,
   **dadurch gekennzeichnet,**
   **daß** während des Andauerns einer stehenden Phase mindestens eine Übertragung (11) betreffend die stehende Phase vom Fahrzeug an die Zentrale (7) erfolgt.

5. Verfahren nach einem der vorhergehenden Ansprüche,
**dadurch gekennzeichnet,**
**daß** mit Informationen betreffend eine stehende Phase eines Fahrzeuges eine Identität des Fahrzeuges übertragen wird.

6. Verfahren nach Anspruch 5,
**dadurch gekennzeichnet,**
**daß** die Information zur Identität eine Telefonnummer des Endgerätes ist.

7. Verfahren nach Anspruch 5 oder 6,
**dadurch gekennzeichnet,**
**daß** auf Grund der Identität eines eine Information (11, 12) sendenden Fahrzeuges in der Zentrale (7) diese Information mit bereits empfangenden Informationen des Fahrzeuges verglichen wird, um mit höherer Signifikanz zu bestimmen, ob das Fahrzeug Parkraum belegt.

8. Verfahren nach einem der vorhergehenden Ansprüche,
**dadurch gekennzeichnet,**
**daß** ein Fahrzeug als parkend angesehen wird, wenn es sich mindestens für eine vorgegebene Zeit am gleichen Ort in einer stehenden Phase befindet.

9. Verfahren nach einem der vorhergehenden Ansprüche,
**dadurch gekennzeichnet,**
**daß** ein Fahrzeug in einer stehenden Phase durch das Endgerät oder die Zentrale als parkend definiert wird, wenn der Motor des Fahrzeuges ausgeschaltet ist.

10. Verfahren nach einem der vorhergehenden Ansprüche,
**dadurch gekennzeichnet,**
**daß** eine stehende Phase eines Fahrzeuges im Fahrzeug durch eine Positionserfassung im Endgerät des Fahrzeuges mittels Vergleichs aufeinanderfolgend erfaßter Positionen festgestellt wird.

11. Verfahren nach einem der vorhergehenden Ansprüche,
**dadurch gekennzeichnet,**
**daß** als Ende einer stehenden Phase eines Fahrzeuges definiert wird, wenn der Motor des Fahrzeuges angelassen wird.

12. Verfahren nach einem der vorhergehenden Ansprüche,
**dadurch gekennzeichnet,**
**daß** als Beginn eines stehenden Phase eines Fahrzeuges definiert wird, wenn die Gangschaltung des Fahrzeuges in einer bestimmten Position, insbesondere einer Park-Stellung bei Automatikgetriebe befindlich ist.

13. Verfahren nach einem der vorhergehenden Ansprüche,
**dadurch gekennzeichnet,**
**daß** als Ende eines stehenden Phase definiert wird, wenn sich die Gangschaltung des Fahrzeuges in einer bestimmten Stellung, insbesondere einer Drive-Stellung bei Automatikgetrieben befindet.

14. Verfahren nach einem der vorhergehenden Ansprüche,
**dadurch gekennzeichnet,**
**daß** in einer Zentrale (7) von dieser als parkend definierte Fahrzeuge (4) mit in der Zentrale vorliegenden Daten (21) zu bekannten Parkplätzen verglichen und daraus die noch freien Parkplätze bestimmt werden.

15. Verfahren nach einem der vorhergehenden Ansprüche,
**dadurch gekennzeichnet,**
**daß** die Bestimmung von freiem Parkraum oder Quoten von freiem Parkraum in einer Stadt nach Zonen differenziert erfolgt.

16. Verfahren nach einem der vorhergehenden Ansprüche,
**dadurch gekennzeichnet,**
**daß** freier Parkraum für einen künftigen Zeitpunkt prognostiziert wird.

17. Verfahren nach einem der vorhergehenden Ansprüche,
**dadurch gekennzeichnet,**
**daß** der Belegungsgrad des Parkraums bestimmt wird gemäß der Beziehung

$$B(\tfrac{1}{2}(t_0 \times t_1)) \approx 1 \, \frac{n(t_1)d_1(t_1)}{\alpha \, N * T}$$

18. Verfahren nach einem der vorhergehenden Ansprüche,
**dadurch gekennzeichnet,**
**daß** Parkraum-Prognosen aufgrund der aktuellen Parkrauminformationen erstellt werden.

19. Verfahren nach einem der vorhergehenden Ansprüche,
**dadurch gekennzeichnet,**
**daß** Parkraumprognosen aufgrund historischer Parkrauminformationen in der Zentrale bestimmt werden.

**20.** Verfahren nach einem der vorhergehenden Ansprüche,

**dadurch gekennzeichnet,**

**daß** für die Prognose des Parkraums zu einem künftigen Zeitpunkt der Wochentag und /oder die Uhrzeit verwendet wird.

**21.** Verfahren nach einem der vorhergehenden Ansprüche,

**dadurch gekennzeichnet,**

**daß** die Zentrale an das Endgerät Informationen über den Ort von Zonen mit mehreren freien Parkplätzen oder über den Ort von einzelnen freien Parkplätzen übermittelt.

**22.** Verfahren nach einem der vorhergehenden Ansprüche,

**dadurch gekennzeichnet,**

**daß** die Kommunikation zwischen der Zentrale und dem Endgerät drahtlos, insbesondere per Mobilfunk erfolgt.

**23.** Verfahren nach einem der vorhergehenden Ansprüche,

**dadurch gekennzeichnet,**

**daß** die Kommunikation (11, 12, 15, 16) zwischen der Zentrale (7) und einem Endgerät (17) in einem Fahrzeug (2, 4) durch Mobilfunk-Kurznachrichten (SMS-MO 11,12 und SMS-MT 14) erfolgt.

**24.** Verfahren nach einem der vorhergehenden Ansprüche,

**dadurch gekennzeichnet,**

**daß** die von der Zentrale an das Fahrzeug übermittelten Daten betreffend freien Parkraum Daten zu sonstigen Informationen, insbesondere Preisen von Parkplätzen enthalten.

**25.** Verfahren nach einem der vorhergehenden Ansprüche,

**dadurch gekennzeichnet,**

**daß** in der Zentrale oder im Endgerät ein Navigationsvorschlag vom aktuellen Ort des Endgerät (17) im Fahrzeug (2) zum freiem Parkraum (6) erstellt wird und vom Endgerät ausgegeben wird.

**26.** Parkraumerfassungssystem, umfassend eine Parkraumerfassungszentrale und an sie Parkrauminformationen übertragende fahrzeugseitige Endgeräte, nach einem der vorhergehenden Ansprüche.

**27.** Parkraumerfassungszentrale nach Anspruch 26

**dadurch gekennzeichnet,**

**daß** die Sende- und Empfangseinrichtung eine Mobilfunkeinrichtung, insbesondere zum Senden und Empfangen von Kurznachrichten, ist.

**28.** Parkraumerfassungszentrale nach einem der Ansprüche 26 oder 27,

**dadurch gekennzeichnet,**

**daß** die Parkraumdatenbearbeitungseinrichtung ausgebildet ist zur Durchführung des Verfahrens nach einem der Ansprüche 1 bis 25.

**Claims**

**1.** A method of automatically acquiring data (11, 12) relating to occupied parking spaces (5) within a traffic network,

- wherein parking-space data (11) representing a stationary phase of the vehicle and the vehicle location ($l_1$ to $l_4$, $b_1$ to $b_4$) are transmitted from a terminal in a vehicle (2) to a central computer (7),
- wherein data (14) relating to free parking spaces are generated by the central computer (7),
- wherein data (14) relating to free parking spaces are transmitted from the central computer (7) to the terminal in the vehicle (2).

**2.** A method according to claim 1, **characterised in that** parking-space data are transmitted (12) to the central computer (7) at the beginning and/or the end of a stationary phase of a vehicle.

**3.** A method according to either one of the preceding claims, **characterised in that** the location of the vehicle is transmitted (12) at the beginning and the end of a stationary phase.

**4.** A method according to any one of the preceding claims, **characterised in that** at least one transmission (11) relating to the stationary phase of the vehicle is made to the central computer (7) during a stationary phase.

**5.** A method according to any one of the preceding claims, **characterised in that** a vehicle identity is transmitted together with data relating to a stationary phase of a vehicle.

**6.** A method according to claim 5, **characterised in that** the identity datum is a telephone number of the terminal.

**7.** A method according to claim 5 or 6, **characterised in that**, on the basis of the identity of a vehicle transmitting a datum (11, 12), this datum is compared in the central computer (7) with vehicle data already received in order to determine with a relatively high level of significance whether the vehicle is occupying a parking space.

**8.** A method according to any one of the preceding claims, **characterised in that** a vehicle is regarded as parked if it is in a stationary phase in the same location at least for a predetermined time.

**9.** A method according to any one of the preceding claims, **characterised in that** a vehicle in a stationary phase is defined by the terminal or the central computer as parked if the engine of the vehicle is switched off.

**10.** A method according to any one of the preceding claims, **characterised in that** a stationary phase of a vehicle is established in the vehicle by a positional determination carried out in the terminal of the vehicle by comparison of successively determined positions.

**11.** A method according to any one of the preceding claims, **characterised in that** the start-up of the vehicle engine is defined as the end of a stationary phase of a vehicle.

**12.** A method according to any one of the preceding claims, **characterised in that** a particular position of the gearshift mechanism of the vehicle, in particular the park position in an automatic transmission, is defined as the beginning of a stationary phase of a vehicle.

**13.** A method according to any one of the preceding claims, **characterised in that** a particular position of the gearshift mechanism of the vehicle, in particular the drive position in automatic transmissions, is defined as the end of a stationary phase.

**14.** A method according to any one of the preceding claims, **characterised in that** vehicles (4) defined by a central computer (7) as parked are compared in the central computer with data (21) available therein relating to known parking spaces, and the parking spaces which are still free are identified on the basis thereof.

**15.** A method according to any one of the preceding claims, **characterised in that** the identification of free parking space or proportions of free parking space in a town is carried out with differentiation by zones.

**16.** A method according to any one of the preceding claims, **characterised in that** free parking space is predicted for a future point in time.

**17.** A method according to any one of the preceding claims, **characterised in that** the level of occupancy of the parking space is determined according to the relationship

$$B(\tfrac{1}{2}(t_0 \times t_1)) \approx 1 \, \frac{n(t_1)d_1(t_1)}{\alpha \, N * T} \, .$$

**18.** A method according to any one of the preceding claims, **characterised in that** parking-space predictions are made on the basis of current parking-space data.

**19.** A method according to any one of the preceding claims, **characterised in that** parking-space predictions are made on the basis of historical parking-space data in the central computer.

**20.** A method according to any one of the preceding claims, **characterised in that** the day of the week and/or the time are used to predict the parking space at a future point in time.

**21.** A method according to any one of the preceding claims, **characterised in that** the central computer transmits, to the terminal, data relating to the location of zones with a plurality of free parking spaces or relating to the location of individual free parking spaces.

**22.** A method according to any one of the preceding claims, **characterised in that** communication between the central computer and the terminal takes place wirelessly, in particular by mobile radio.

**23.** A method according to any one of the preceding claims, **characterised in that** communication (11, 12, 15, 16) between the central computer (7) and a terminal (17) in a vehicle (2, 4) takes place by means of mobile-radio short messages (SMS-MO 11, 12 and SMS-MT 14).

**24.** A method according to any one of the preceding claims, **characterised in that** the data transmitted from the central computer to the vehicle and relating to free parking space contain data relating to other information, in particular prices of parking spaces.

**25.** A method according to any one of the preceding claims, **characterised in that** a proposed route from the current location of the terminal (17) in the vehicle (2) to the free parking space (6) is drawn up in the central computer or in the terminal and is output by the terminal.

**26.** A parking-space identification system, comprising a central computer for the identification of parking spaces and vehicle terminals transmitting parking-space data to it, according to any one of the preceding claims.

**27.** A central computer for the identification of parking spaces according to claim 26, **characterised in that** the transmitting and receiving device is a mobile radio set, in particular for transmitting and receiving short messages.

28. A central computer for the identification of parking spaces according to either one of claims 26 and 27, **characterised in that** the parking-space data processor is configured to carry out the method according to any one of claims 1 to 25.

**Revendications**

1. Procédé pour saisir automatiquement des informations (11, 12) concernant l'espace de stationnement occupé (5) dans un réseau de circulation,

   - dans lequel, par un terminal (2) disposé du côté du véhicule, des informations (11) d'espace de stationnement, représentant une phase d'immobilité du véhicule et le lieu du véhicule (l1 à l4, b1 à b4), sont transmises à une centrale (7),
   - dans lequel des informations (14) concernant l'espace de stationnement libre sont engendrées par la centrale (7),
   - dans lequel les informations (14) concernant l'espace de stationnement libre sont transmises par la centrale (7) au terminal (2) disposé du côté véhicule.

2. Procédé selon la revendication 1, **caractérisé en ce que**, au début et/ou à la fin d'une phase d'immobilité d'un véhicule, des informations d'espace de stationnement sont transmises (12) à la centrale (7).

3. Procédé selon l'une des revendications précédentes, **caractérisé en ce qu'**on transmet (12) le lieu du véhicule, au début et à la fin d'une phase d'immobilité.

4. Procédé selon l'une des revendications précédentes, **caractérisé en ce que**, pendant la durée d'une phase d'immobilité, au moins une transmission (11) concernant la phase d'immobilité a lieu du véhicule à la centrale (7).

5. Procédé selon l'une des revendications précédentes, **caractérisé en ce que**, avec les informations concernant une phase d'immobilité d'un véhicule, on transmet l'identité du véhicule.

6. Procédé selon la revendication 5, **caractérisé en ce que** l'information d'identité est un numéro de téléphone du terminal.

7. Procédé selon l'une des revendications 5 ou 6, **caractérisé en ce que** dans la centrale (7), sur la base de l'identité d'un véhicule transmettant une information (11, 12), cette information est comparée avec des informations du véhicule déjà reçues pour déterminer avec une plus grande signification si le véhicule occupe l'espace de stationnement.

8. Procédé selon l'une des revendications précédentes, **caractérisé en ce qu'**un véhicule est considéré comme en stationnement, lorsqu'il se trouve dans une phase d'immobilité au moins pendant une durée prédéterminée au même endroit.

9. Procédé selon l'une des revendications précédentes, **caractérisé en ce qu'**un véhicule est défini comme en stationnement par le terminal ou la centrale lorsque le moteur du véhicule est arrêté.

10. Procédé selon l'une des revendications précédentes, **caractérisé en ce qu'**une phase d'immobilité d'un véhicule est déterminée dans le véhicule par une saisie de position dans le terminal du véhicule par comparaison de positions saisies les unes à la suite des autres.

11. Procédé selon l'une des revendications précédentes, **caractérisé en ce qu'**on définit la fin d'une phase d'immobilité d'un véhicule, lorsque le moteur du véhicule est démarré.

12. Procédé selon l'une des revendications précédentes, **caractérisé en ce qu'**on définit le début d'une phase d'immobilité d'un véhicule, lorsque le dispositif de changement de vitesses du véhicule est dans une position déterminée, en particulier la position de stationnement Park dans les boîtes de vitesses automatiques.

13. Procédé selon l'une des revendications précédentes, **caractérisé en ce qu'**on définit la fin d'une phase d'immobilité, lorsque le dispositif de changement de vitesses du véhicule est dans une position déterminée, en particulier la position Drive dans les boîtes de vitesses automatiques.

14. Procédé selon l'une des revendications précédentes, **caractérisé en ce que**, dans une centrale (7), des informations de véhicule (4) considéré comme en stationnement sont comparées à des informations (21) se trouvant dans la centrale et concernant des places de stationnement et on détermine ainsi les places de stationnement encore libres.

15. Procédé selon l'une des revendications précédentes,
**caractérisé en ce que** la détermination de l'espace de stationnement libre ou le pourcentage d'espace de stationnement libre dans une ville est différenciée par zones.

16. Procédé selon l'une des revendications précédentes,
**caractérisé en ce que** l'espace de stationnement libre est pronostiqué pour un moment futur.

17. Procédé selon l'une des revendications précédentes,
**caractérisé en ce que** le degré d'occupation de l'espace de stationnement est déterminé par la formule

$$B(\frac{1}{2}(t_0 x t_1)) \approx 1 \; \frac{n(t_1)d_1(t_1)}{\alpha \; N * T}$$

18. Procédé selon l'une des revendications précédentes,
**caractérisé en ce que** les pronostics d'espace de stationnement sont élaborés à partir des informations d'espace de stationnement actuelles.

19. Procédé selon l'une des revendications précédentes,
**caractérisé en ce que** les pronostics d'espace de stationnement sont déterminés dans la centrale sur la base d'informations d'espace de stationnement historiques.

20. Procédé selon l'une des revendications précédentes,
**caractérisé en ce que** pour le pronostic de l'espace de stationnement pour un moment futur, on utilise le jour de la semaine et/ou l'heure.

21. Procédé selon l'une des revendications précédentes,
**caractérisé en ce que** la centrale transmet au terminal des informations sur le lieu de zones avec plusieurs places de stationnement libres ou sur le lieu de places de stationnement individuelles libres.

22. Procédé selon l'une des revendications précédentes,
**caractérisé en ce que** la communication entre la centrale et le terminal est sans fil, en particulier par radio mobile.

23. Procédé selon l'une des revendications précédentes,
**caractérisé en ce que** la communication (11, 12, 15, 16) entre la centrale (7) et un terminal (17) dans un véhicule (2, 4) est réalisée par radio flash de radio mobile (SMS-MO 11, 12 et SMS-MT 14).

24. Procédé selon l'une des revendications précédentes,
**caractérisé en ce que** les informations concernant l'espace de stationnement libre, transmises par la centrale au véhicule, contiennent d'autres informations, en particulier les prix des places de stationnement.

25. Procédé selon l'une des revendications précédentes,
**caractérisé en ce que**, dans la centrale ou dans le terminal, est élaborée une proposition de navigation entre l'emplacement actuel du terminal (17) dans le véhicule (2) et l'espace de stationnement libre (6), ladite proposition étant délivrée par le terminal.

26. Système de saisie d'espace de stationnement, comportant une centrale de saisie d'espace de stationnement et des terminaux disposés du côté de véhicules et transmettant des informations d'espace de stationnement à ladite centrale, comme spécifié sous l'une des revendications précédentes.

27. Centrale de saisie d'espace de stationnement selon la revendication 26,
**caractérisée en ce que** le dispositif d'émission-réception est un dispositif radio mobile, en particulier pour l'émission et la réception de radio flash.

28. Centrale de saisie d'espace de stationnement selon l'une des revendications 26 ou 27,
**caractérisée en ce que** le dispositif de traitement des informations d'espace de stationnement est construit pour la mise en oeuvre du procédé selon l'une des revendications 1 à 25.

Fig. 1

**Zentrale**

Speicher /
belegter Parkraum:
Parkbucht 5: belegt,
I1I2I3I4b1b2b3b4

Speicher / bekannter
Parkraum:
Parkbucht 5:
I1I2I3I4b1b2b3b4
Parkbucht 6:
I5I6I7I8b5b6b7b8
.......

Parkraumdatenbearbeitungseinrichtung

Sende-
und
Empfangs-
Einrichtung

7

20

21

22

18

23

13

16

14

**Endgerät im Fahrzeug**

Speicher/ freier
Parkraum:
I5I6I7I8b5b6b7b8

Digitale Karte /
Verkehrsnetz

Navigationsvorschlagserarbeitungseinrichtung

Ausgabeeinrichtung

17

24

25

26

EP 1 006 503 B1

**Fig. 2**